# EUROPÄISCHE PATENTSCHRIFT

(11) **EP 3 987 195 B1**
(45) Veröffentlichungstag und Bekanntmachung des Hinweises auf die Patenterteilung: **30.08.2023**
(21) Anmeldenummer: 19734312.2
(22) Anmeldetag: 19.06.2019
(51) Int. Cl.: F16D 55/2255, F16D 55/226

(54) **FAHRZEUGBREMSE, INSBESONDERE NUTZFAHRZEUG-DRUCKLUFTSCHEIBENBREMSE SOWIE DRUCKSTÜCK FÜR SELBIGE**
VEHICLE BRAKE, IN PARTICULAR A UTILITY VEHICLE COMPRESSED-AIR DISK BRAKE, AND PRESSURE PIECE FOR THE SAME
FREIN DE VÉHICULE, EN PARTICULIER FREIN À DISQUE PNEUMATIQUE DE VÉHICULE UTILITAIRE AINSI QUE PIÈCE DE POUSSÉE POUR CELUI-CI

(43) Veröffentlichungstag der Anmeldung: 27.04.2022
(73) Patentinhaber: ZF CV Systems Europe BV, 1170 Brussels (BE)
(72) Erfinder: SCHERER, Vitalij, 69181 Leimen (DE); ENGLMEIER, Marco, Köln (DE); MITTENDORF, Roman-Marius, 64646 Heppenheim (DE); MOSER, Peter, 74915 Waibstadt-Daisbach (DE)
(74) Vertreter: Ohlendorf, Henrike
(86) Internationale Anmeldenummer: PCT/EP2019/066186
(87) Internationale Veröffentlichungsnummer: WO 2020/253955

(56) Entgegenhaltungen:
- EP-A2- 2 754 912
- WO-A1-2015/107135
- DE-A1-102012 006 101
- DE-A1-102014 017 430
- US-A1- 2019 136 925

## Beschreibung

Die Erfindung betrifft eine Fahrzeugbremse, insbesondere eine Nutzfahrzeug-Druckluftscheibenbremse, mit einem Bremssattel, einer in dem Bremssattel angeordneten Druckstückführung, und einem in der Druckstückführung entlang einer Bewegungsachse geführten Druckstück, wobei die Druckstückführung als Ausnehmung ausgebildet ist, und das Druckstück eine mit der Ausnehmung korrespondierende Außenkontur aufweist.

Derartige Fahrzeugbremsen, bei denen ein sogenanntes Druckstück in einer in einem Bremssattel angeordneten Druckstückführung entlang einer Bewegungsachse geführt ist, sind aus dem Stand der Technik bekannt (siehe z.B. die Beispiele aus den DE102012006101 A1, US 2019/136925 A1, DE102014017430 A1 und EP 2754912A2). Bei aus dem Stand der Technik bekannten Fahrzeugbremsen werden sogenannte Führungsleisten oder alternativ halbmondförmige Führungen zur Führung des Druckstücks in dem Bremssattel eingesetzt. Führungsleisten bieten den Vorteil, dass das Führungsspiel eines Druckstückes in der Druckstückführung durch einfache Anpassung der Führungsleisten richtungsunabhängig eingestellt werden kann. Allerdings liegt ein wesentlicher Nachteil solcher Führungsleisten darin, dass deren Fertigung aufwendig ist, welches sich nachteilig auf die Fertigungskosten auswirkt.

Deutlich einfacher und insgesamt kostengünstiger herstellbar sind die ebenfalls bekannten halbmondförmigen Führungen. Die halbmondförmige Grundgeometrie dieser Führungen erschwert jedoch die Einstellung des Führungsspiels zwischen Druckstück und Druckstückführung. Insbesondere geht mit der halbmondförmigen Führung eine Kopplung des seitlichen Führungsspiels in die abzustützenden Richtungen einher.

Das seitliche Führungsspiel hat Komponenten in einer ersten Richtung, und einer hierzu orthogonalen zweiten Richtung, jeweils quer bezogen auf die Längsachse des Druckstücks. Die Längsachse des Druckstücks wird hierbei als die Hauptbewegungsrichtung des Druckstücks beim Ausüben der Bremsfunktion verstanden. Die erste Richtung ist bei üblicher Montage der Fahrzeugbremse beispielsweise vertikal, und die zweite Richtung ist horizontal. Bezogen die Ausrichtung relativ zur Bremsscheibe ist die erste Richtung beispielsweise als die radiale Richtung zu verstehen, und die zweite Richtung als die Umfangsrichtung, d.h. Tangentialrichtung.

Hierbei erweist es sich als besonders nachteilig, dass das seitliche Führungsspiel in der ersten Richtung und in der zweiten Richtung nur unzureichend unabhängig voneinander eingestellt werden kann.

Ausgehend vom beschriebenen Stand der Technik ist es daher Aufgabe der vorliegenden Erfindung, eine Fahrzeugbremse der eingangs bezeichneten Art dahingehend weiterzubilden, dass die im Stand der Technik aufgefundenen Nachteile möglichst weitgehend behoben werden. Insbesondere soll eine Fahrzeugbremse angegeben werden, deren Druckstück bzw. Druckstückführung mit geringem Aufwand fertigbar sind und wobei gleichzeitig ein einfaches, weitestgehend unabhängiges und genaues Einstellen des seitlichen Führungsspiels in der ersten und der zweiten Richtung vorgenommen werden kann.

Erfindungsgemäß wird die Aufgabe bei einer Fahrzeugbremse der eingangs genannten Art dadurch gelöst, dass die Druckstückführung und/oder die Außenkontur des Druckstücks auf beiden Seiten des Druckstücks in gekrümmte mehrere zueinander beabstandete Teilflächen unterteilt ist.

Durch eine derartige Ausgestaltung dieser Teilflächen wird eine gezielte und weitestgehend unabhängige Einstellbarkeit des seitlichen Führungsspiels in der ersten und zweiten Richtung möglich. Gleichzeitig sind solche Teilflächen - im Vergleich zu aus dem Stand der Technik vorbekannten Führungsleisten - mit geringerem Aufwand fertigbar.

Die Erfindung wird dadurch weitergebildet, dass die Teilflächen Kontaktflächen zum Abstützen des Druckstücks an der Druckstückführung aufweisen, wobei sich die Kontaktflächen zumindest teilweise in Richtung der Bewegungsachse erstrecken, und wobei die Kontaktflächen an dem Druckstück in einem Bezugsebenenbereich senkrecht zur Bewegungsachse des Druckstücks eine konvexe Krümmung aufweisen, während die gegenüberliegenden Kontaktflächen an der Ausnehmung in dem Bezugsebenenbereich eine, vorzugsweise korrespondierende, konkave Krümmung aufweisen. Als Kontaktflächen werden dabei vorliegend jene Flächen aufgefasst, an welchen Druckstück und Ausnehmung miteinander in Kontakt treten.

Aufgrund dieser gewölbten Ausbildung der Kontaktflächen dergestalt, dass diese je nach Anordnung derselben an dem Druckstück eine konvexe Krümmung aufweisen, oder im Falle einer Anordnung an der Ausnehmung eine konkave Krümmung, wird der Kontaktbereich zwischen Druckstück und Druckstückführung hinreichend kleinflächig gehalten, wobei gleichzeitig durch zielgerichtete Ausgestaltung, etwa durch eine zielgerichtete Anordnung, oder durch ein zielgerichtetes Krümmungsprofil der Kontaktflächen, eine zielgerichtete Einstellung des Führungsspiels vorgenommen werden kann. Insbesondere wird es dadurch möglich, das seitliche Führungsspiel in der ersten und zweiten Richtung weitestgehend unabhängig voneinander einstellen zu können.

Gemäß einer bevorzugten Ausführungsform beschreibt die konkave Krümmung und/oder die konvexe Krümmung in dem Bezugsebenenbereich einen Teilkreis. Derartige Teilkreise sind auf der einen Seite bei überschaubarem Fertigungsaufwand exakt fertigbar und haben sich zur Führungsspieleinstellung als vorteilhaft erwiesen.

Weiterhin ist gemäß einer bevorzugten Ausführungsform vorgesehen, dass die Druckstückführung und/oder das Druckstück ein erstes Kontaktflächenpaar zur seitlichen Führung des Druckstücks in der ersten Richtung aufweisen und/oder eine zweite Kontaktfläche zur seitlichen Führung des Druckstücks in der zweiten Richtung. Durch eine solche Konfiguration lassen sich auf der einen Seite Betriebskräfte und Momente zuverlässig von dem Druckstück auf die Druckstückführung und umgekehrt übertragen, und gleichzeitig das seitliche Führungsspiel in der ersten und zweiten Richtung weitestgehend unabhängig voneinander einstellen.

Vorzugsweise ist wenigstens eine der Kontaktflächen des Kontaktflächenpaars in dem Bezugsebenenbereich durch jeweils einen Teilkreisabschnitt mit einem ersten Radius R₁ und einen Radiusmittelpunkt C1 gebildet und/oder die zweite Kontaktfläche ist in dem Bezugsebenenbereich durch einen Teilkreisabschnitt mit einem zweiten Radius R₂ und einem zweiten Radiusmittelpunkt C2 gebildet. Durch eine geeignete Auswahl der Radien R₁ und R₂ sowie der Radienmittelpunkte C1 sowie C2 lässt sich das seitliche Führungsspiel in der ersten und zweiten Richtung geeignet einstellen.

Dabei ist bevorzugt, dass die Radien R₁ sowie R₂ ihrer Größe nach voneinander abweichen. Zusätzlich oder alternativ ist bevorzugt, dass die Radienmittelpunkte C1 sowie C2 voneinander abweichen.

Die Erfindung wird dadurch weitergebildet, dass zwischen den Kontaktflächen Trennflächen angeordnet sind. Die Anordnung solcher Trennflächen zwischen den Kontaktflächen hat sich als vorteilhaft zur Entkopplung des seitlichen Führungsspiels in der ersten und zweiten Richtung voneinander erwiesen.

Gemäß einer bevorzugten Ausführungsform weisen die Trennflächen der ruckstückführung in dem Bezugsebenenbereich eine von der Krümmung der Kontaktflächen abweichende Krümmung auf, und/oder die Trennflächen weisen an dem Druckstück in dem Bezugsebenenbereich eine von den Kontaktflächen an dem Druckstück abweichende Krümmung auf. Die Krümmungsrichtung der Trennflächen ist dabei vorzugsweise der Krümmungsrichtung der Kontaktflächen, bezogen auf das entsprechende Bauteil Druckstück oder Druckstückführung, abschnittsweise entgegengesetzt, um gleichzeitig einen sanften Übergang zwischen Kontaktflächen und Trennflächen sowie eine Beabstandung zwischen Druckstück und Druckstückführung zu erzielen.

Weiterhin ist bevorzugt, dass wenigstens eine Trennfläche, vorzugsweise mehrere oder sämtliche Trennflächen, in dem Bezugsebenenbereich zumindest abschnittsweise einen Teilkreis beschreibt bzw. beschreiben.

Gemäß einer alternativ bevorzugten Ausführungsform gehen die Trennflächen und die Teilflächen der Kontaktflächen unterbrechungsfrei, insbesondere stetig, d.h. knick- und sprungfrei, ineinander über. Vorzugsweise sind solche unterbrechungsfreien Übergänge unmittelbar zwischen jeweils gekrümmten Flächenabschnitten gebildet, oder es sind zwischen jeweils zwei gekrümmten Flächenabschnitten ungekrümmte Zwischenabschnitte angeordnet.

Gemäß einer alternativ bevorzugten Ausführungsform sind am Übergang zwischen zwei gewölbten Abschnitten vorzugsweise knickfrei Zwischenabschnitte angeordnet. Solche Zwischenabschnitte können etwa als eine Gerade oder als ein alternativ ausgebildeter Abschnitt ausgebildet sein.

Die Erfindung ist vorstehend unter Bezugnahme auf eine Fahrzeugbremse beschrieben worden. In einem weiteren Aspekt betrifft die Erfindung ein Druckstück oder einen Bremssattel für eine Fahrzeugbremse, insbesondere für eine Nutzfahrzeug-Druckluftscheibenbremse.

Die Erfindung löst die eingangs bezeichnete Aufgabe in Bezug auf das Druckstück oder den Bremssattel, indem das Druckstück eine Außenkontur aufweist, welche in mehrere zueinander beabstandete Teilflächen unterteilt ist, bzw. der Bremssattel eine Druckstückführung mit einer Ausnehmung, welche in mehrere zueinander beabstandete Teilflächen unterteilt ist.

Die Erfindung wird bei dem Druckstück dadurch weitergebildet, dass die Teilflächen Kontaktflächen zum Abstützen des Druckstücks an einer Druckstückführung aufweisen, wobei sich die Kontaktflächen zumindest teilweise in Richtung einer Druckstück-Bewegungsachse erstrecken, und wobei die Kontaktflächen an dem Druckstück in einem Bezugsebenenbereich senkrecht zur Bewegungsachse des Druckstücks eine konvexe Krümmung aufweisen. Für den Bremssattel gilt entsprechendes für die Ausnehmung, in der also die Teilflächen Kontaktflächen zum Abstützen des Druckstücks an der Druckstückführung aufweisen, wobei sich die Kontaktflächen zumindest teilweise in Richtung der Druckstück-Bewegungsachse erstrecken, und wobei die Kontaktflächen an der Druckstückführung in dem Bezugsebenenbereich senkrecht zur Bewegungsachse des Druckstücks eine konkave Krümmung aufweisen.

Weiterhin beschreibt die konvexe bzw. konkave Krümmung in dem Bezugsebenenbereich vorzugsweise jeweils einen Teilkreis.

Gemäß einer bevorzugten Weiterbildung weisen das Druckstück bzw. der Bremssattel jeweils ein erstes Kontaktflächenpaar zur seitlichen Führung des Druckstücks in der ersten Richtung auf und/oder eine zweite Kontaktfläche zur seitlichen Führung des Druckstücks in der zweiten Richtung.

Die Erfindung wird dadurch weitergebildet, dass wenigstens eine der Kontaktflächen des Kontaktflächenpaars in dem Bezugsebenenbereich durch jeweils einen Teilkreisabschnitt mit einem ersten Radius R₁ und einen Radiusmittelpunkt C1 gebildet ist und/oder die zweite Kontaktfläche in dem Bezugsebenenbereich durch einen Teilkreisabschnitt mit einem zweiten Radius R₂ und einem zweiten Radiusmittelpunkt C2 gebildet ist.

Vorzugsweise weisen die Radien R₁ sowie R₂ ihrer Größe nach voneinander ab und/oder die Radienmittelpunkte C1 sowie C2 voneinander ab.

Darüber hinaus sind zwischen den Kontaktflächen bevorzugt Trennflächen angeordnet.

Die Erfindung wird dadurch weitergebildet, dass die Trennflächen und die Teilflächen der Kontaktflächen unterbrechungsfrei, insbesondere stetig, d.h. knick- und sprungfrei, ineinander übergehen. Vorzugsweise sind solche unterbrechungsfreien Übergänge unmittelbar zwischen jeweils gekrümmten Flächenabschnitten gebildet, oder es sind zwischen jeweils zwei gekrümmten Flächenabschnitten ungekrümmte Zwischenabschnitte angeordnet.

Gemäß einer bevorzugten Ausführungsform ist das Druckstück als Gussteil ausgebildet. Vorzugsweise sind insbesondere die Trennflächen bereits in einer Rohteilkontur des Gussteils vorgesehen. Der Bearbeitungsaufwand des Druckstück kann hierdurch weiter reduziert werden.

Gemäß einer weiter bevorzugten Ausführungsform ist der Bremssattel, der die Druckstückführung aufweist, als Gussteil ausgebildet. Vorzugsweise sind insbesondere die Trennflächen bereits in einer Rohteilkontur des Gussteils vorgesehen. Der Bearbeitungsaufwand des Druckstück kann hierdurch weiter reduziert werden.

Das Druckstück und der Bremssattel machen sich die gleichen Vorteile zunutze, wie die erfindungsgemäße Fahrzeugbremse. Die bevorzugten Ausführungsformen der Fahrzeugbremse sind zugleich bevorzugte Ausführungsformen des Druckstücks und des Bremssattels und umgekehrt. Diesbezüglich wird auf die obigen Ausführungen verwiesen und deren Inhalt hiermit einbezogen.

Ausführungsbeispiele der Erfindung werden nun nachfolgend anhand der Zeichnungen beschrieben. Diese sollen die Ausführungsbeispiele nicht notwendigerweise maßstäblich darstellen, vielmehr sind Zeichnungen, wo zur Erläuterung dienlich, in schematischer und/oder leicht verzerrter Form ausgeführt. Im Hinblick auf Ergänzungen der aus den Zeichnungen unmittelbar erkennbaren Lehren, wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, in den Bezeichnungen und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt sich auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwert offenbart und beliebig einsetzbar und beansprucht sein. Der Einfachheit halber sind nachfolgend identische Teile oder Teile mit identischer oder ähnlicher Funktion mit gleichen Bezugszeichen versehen. Weitere Vorteile, Merkmale und Einzelheiten der Erfindung ergeben sich aus der nachfolgenden Beschreibung, den bevorzugten Ausführungsformen sowie anhand der folgenden Figuren:

Im Einzelnen zeigen:
- Fig. 1: ein erstes Ausführungsbeispiel einer erfindungsgemäßen Fahrzeugbremse mit einem erfindungsgemäßen Druckstück in einer Seitenansicht;
- Fig. 2: einen erfindungsgemäßen Bremssattel gemäß dem ersten Ausführungsbeispiel der Erfindung in einer perspektivischen Ansicht;
- Fig. 3: ein erfindungsgemäßes Druckstück gemäß dem ersten Ausführungsbeispiel in einer perspektivischen Darstellung;
- Fig. 4 und 5: eine Detailansicht sowie eine schematische Darstellung der Außenkontur des erfindungsgemäßen Druckstücks gemäß dem ersten Ausführungsbeispiel;
- Fig. 6: ein zweites Ausführungsbeispiel einer erfindungsgemäßen Fahrzeugbremse mit einem Druckstück in einer Seitenansicht;
- Fig. 7: einen Bremssattel einer Fahrzeugbremse gemäß dem zweiten Ausführungsbeispiel in einer perspektivischen Ansicht;
- Fig. 8: ein Druckstück gemäß dem zweiten Ausführungsbeispiel der Erfindung in einer perspektivischen Ansicht;
- Fig. 9, 10: eine Detailansicht sowie eine schematische Darstellung einer Druckstückführung gemäß dem zweiten Ausführungsbeispiel der Erfindung.

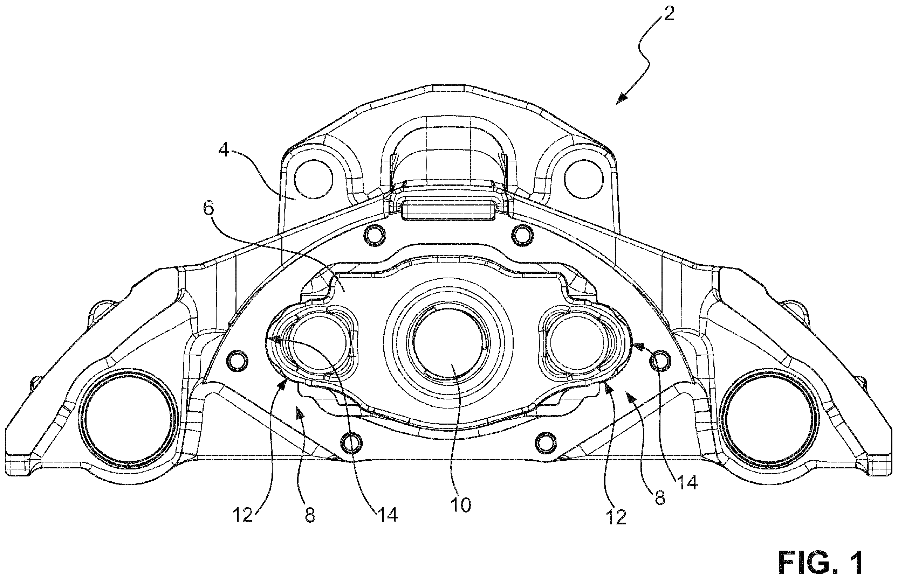

Fig. 1 zeigt eine Fahrzeugbremse 2, welche einen Bremssattel 4 mit einer Druckstückführung 8 aufweist, in der ein Druckstück 6 entlang einer Bewegungsachse 10 beweglich geführt ist. Die Druckstückführung 8 ist dergestalt ausgebildet, dass das Druckstück 6 eine Außenkontur 14 aufweist, welche mit einer Ausnehmung 12 des Bremssattels 4 korrespondiert.

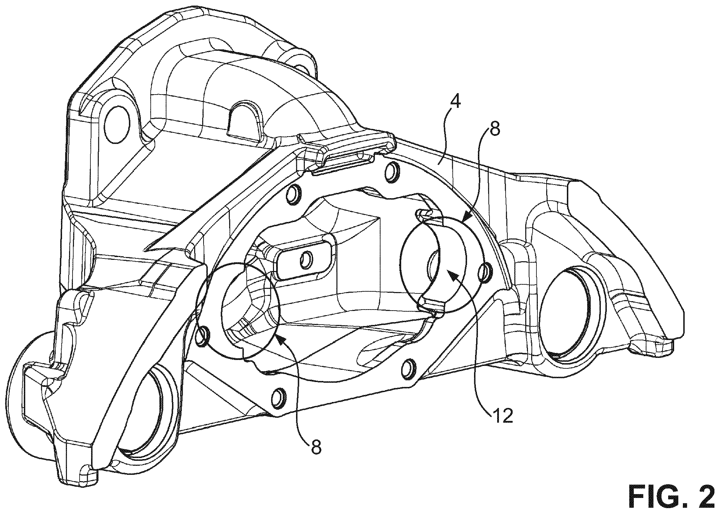

In Fig. 2 ist der Bremssattel 4 ohne das Druckstück 6 in einer perspektivischen Ansicht gezeigt. Die Druckstückführung 8 wird auf Seiten des Bremssattels 4 durch die Ausnehmungen 12 gebildet. Die Ausnehmung 12 ist bei dem in den Figuren 1 bis 5 gezeigten Ausführungsbeispiel, wie in der Fig. 2 dargestellt, im Wesentlichen halbmondförmig ausgebildet. Die Ausnehmung 12 sowie der Bremssattel 4 insgesamt entspricht im Wesentlichen einem aus dem Stand der Technik vorbekannten Bremssattel 4.

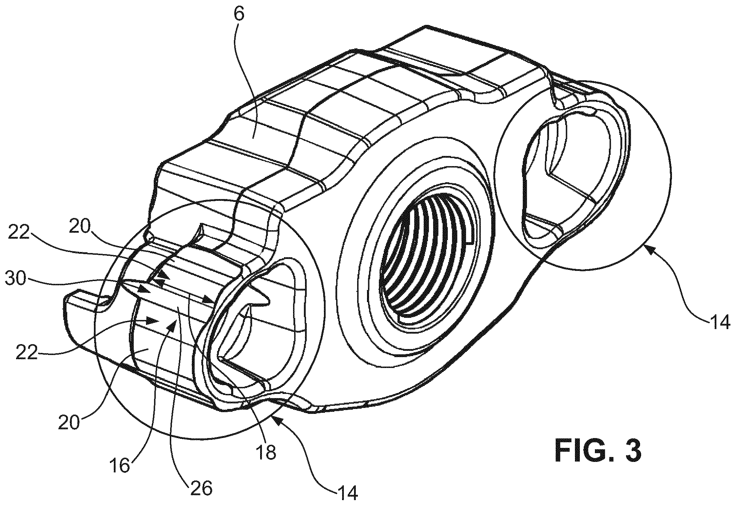

In Fig. 3 ist das Druckstück 6 perspektivisch dargestellt. Das Druckstück 6 weist im Bereich der Druckstück-Außenkonturen 14 Teilflächen 16 auf. Die Teilflächen 16 werden vorliegend durch Kontaktflächen 20, an denen das Druckstück 6 mit der Ausnehmung 12 des Bremssattels 4 in Kontakt tritt, gebildet sowie durch Trennflächen 26, im Bereich welcher kein Kontakt besteht zwischen dem Druckstück 6 und der Ausnehmung 12 des Bremssattels 4. Die Teilflächen 16 erstrecken sich in Richtung der Bewegungsachse 10 (vgl. Fig. 1) des Druckstückes 6 in einem Bezugsebenenbereich 18. Die Trennflächen 26 des Druckstückes 6 weisen eine abweichende, in diesem Fall zumindest abschnittsweise entgegengesetzte Krümmung 30 auf. Die Kontaktflächen 20 des Druckstückes 6 weisen eine konvexe Krümmung 22. Durch die Ausgestaltung der Kontaktflächen 20, insbesondere durch zielgerichtete Auslegung deren konvexer Krümmung 22, wird erfindungsgemäß ermöglicht, dass seitliche Führungsspiel der Druckstückführung 8 in der ersten und der zweiten Richtung weitestgehend unabhängig voneinander anzupassen. Dabei kann das erfindungsgemäße Druckstück 6 mit einem aus dem Stand der Technik bekannten Bremssattel 4 mit einer Ausnehmung 12 verwendet werden.

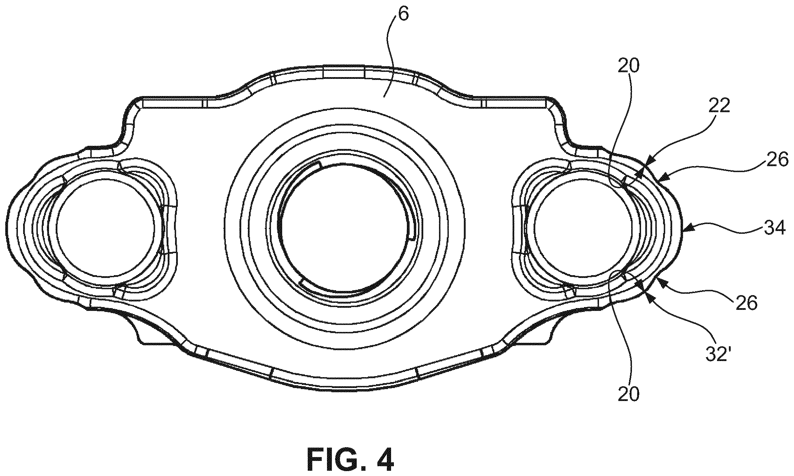

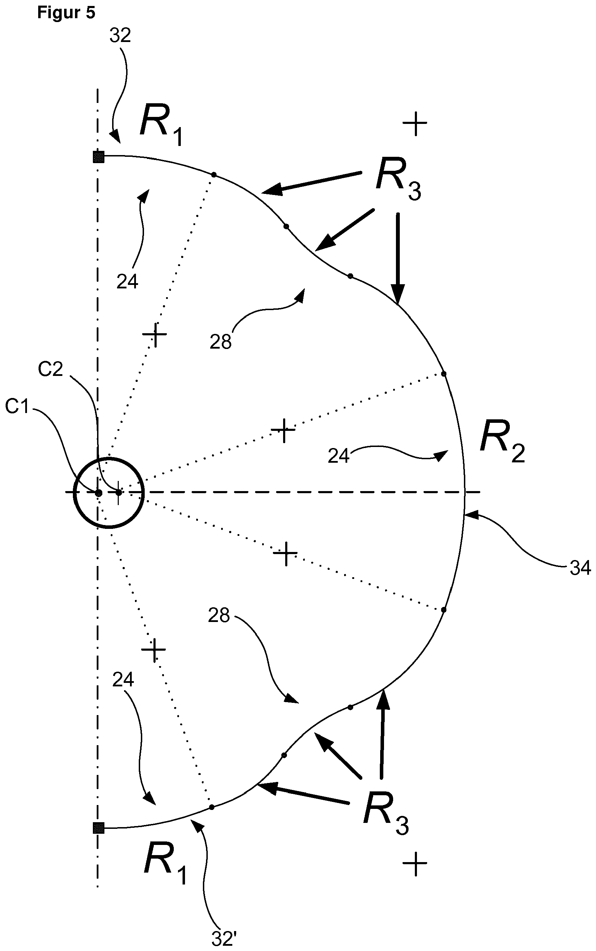

Die Ausbildung der Kontaktflächen 20 sowie der Trennflächen 26 ist in den Figuren 4 und 5 weiter detailliert. Das in der Fig. 4 gezeigte Druckstück 6 weist ein erstes Kontaktflächenpaar 32, 32' zur seitlichen Führung des Druckstückes 6 in der ersten Richtung auf. Durch eine zielgerichtete Dimensionierung dieses Kontaktflächenpaars 32, 32' lässt sich das seitliche Führungsspiel in der ersten Richtung mit der Druckstückführung 8 anpassen.

Darüber hinaus weist das Druckstück 6 eine zweite Kontaktfläche 34 zur seitlichen Führung des Druckstückes 6 in der zweiten Richtung auf. Mit anderen Worten erfolgt durch die zweite Kontaktfläche 34 eine Stützung des Druckstückes 6 in der zweiten Richtung, wobei durch eine zielgerichtete Auslegung der zweiten Kontaktfläche 34 das seitliche Führungsspiel in der zweiten Richtung mit der Druckstückführung 8 beeinflussbar ist. Zwischen jeder Kontaktfläche 32, 32', 34 ist eine Trennfläche 26 zur Entkopplung der Kontaktflächen angeordnet.

Wie unter Bezugnahme auf Fig. 5 dargestellt ist, werden die Kontaktflächen 32, 32' des ersten Kontaktflächenpaars 32, 32' durch Teilkreise 24 mit einem Radius R₁ und einem Radienmittelpunkt C1 in der in der Fig. 5 gezeigten Bezugsebene definiert. Die zweite Kontaktfläche 34 zur seitlichen Führung des Druckstückes 6 in der zweiten Richtung weist einen Radius R₂ auf sowie einen zweiten Radiusmittelpunkt C2 Vorzugsweise weichen die Radienmittelpunkte C1 sowie C2 voneinander ab. Zusätzlich oder alternativ sind auch die Radien R₁ sowie R₂ ihrer Größe nach unterschiedlich voneinander dimensioniert. Zwischen den Teilkreisen 24 der Kontaktflächen 20 sind Trennflächen-Teilkreise 28 angeordnet, welche einen Radius R₃ aufweisen.

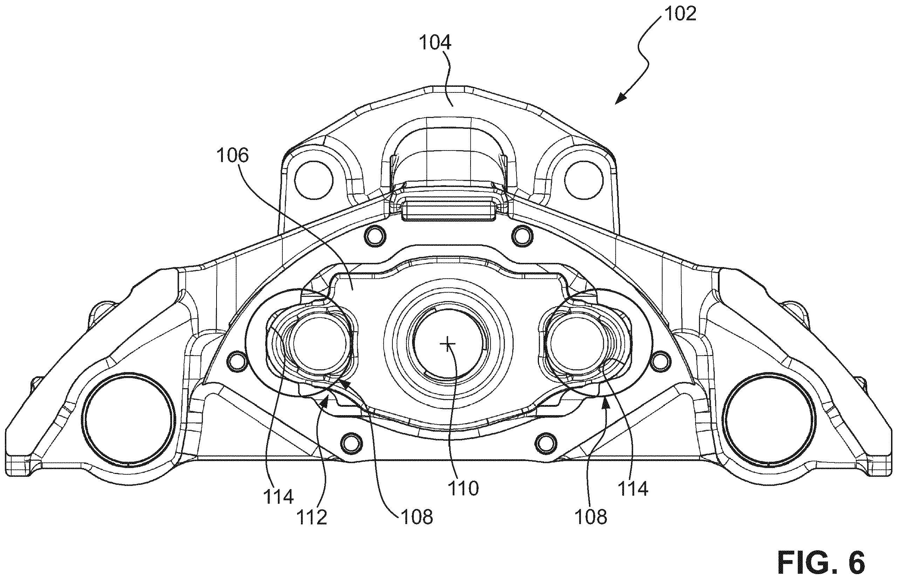

Die Figuren 6 bis 10 zeigen ein alternatives Ausführungsbeispiel einer Fahrzeugbremse 102, wobei im Gegensatz zu dem in den Figuren 1 bis 5 gezeigten Ausführungsbeispiel die Teilflächen 116 in der Ausnehmung 112 des Bremssattel 104 angeordnet sind. Bei diesem Ausführungsbeispiel kann ein aus dem Stand der Technik vorbekanntes Druckstück 106 mit dem Bremssattel 104 verwendet werden.

Fig. 6 zeigt in bekannter Weise eine Fahrzeugbremse 102, welche einen Bremssattel 104 aufweist, in welchem mittels einer Druckstückführung 108 ein Druckstückes 106 entlang einer Bewegungsachse 110 beweglich gelagert ist. Der Bremssattel 104 weist Ausnehmungen 112 auf, welche im Wesentlichen mit einer Außenkontur 114 des Druckstückes 106 korrespondieren.

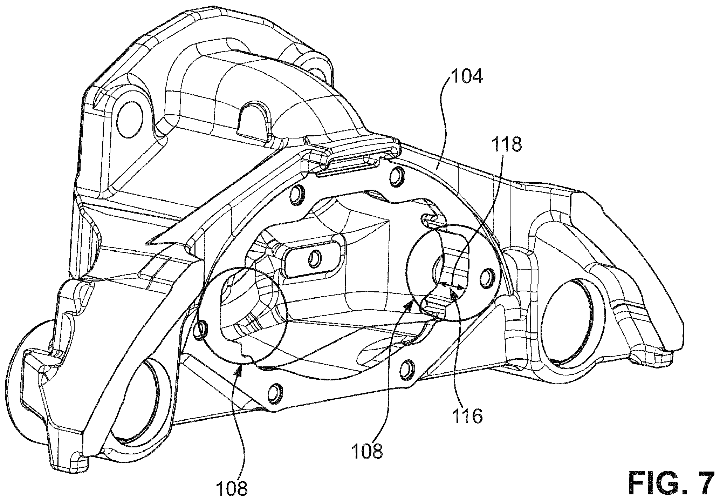

Fig. 7 zeigt eine perspektivische Darstellung des Bremssattels 104 mit den Druckstückführungen 108. Die Druckstückführungen 108 weisen Teilflächen 116 auf, die sich in einem Bezugsebenenbereich 118 entlang der Bewegungsachse 110 des Druckstückes 106 (vgl. Fig. 1) erstrecken.

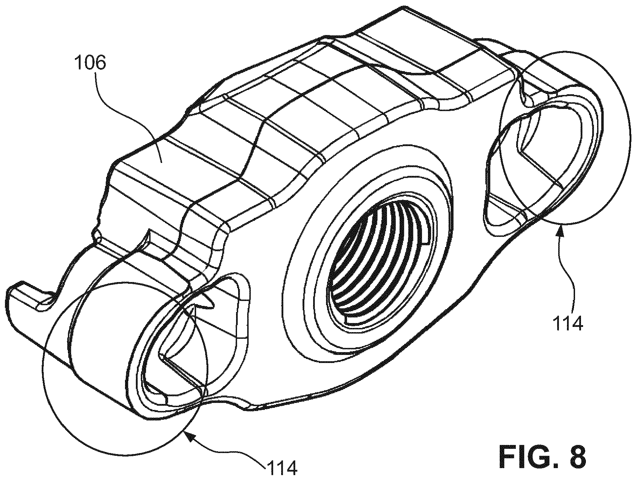

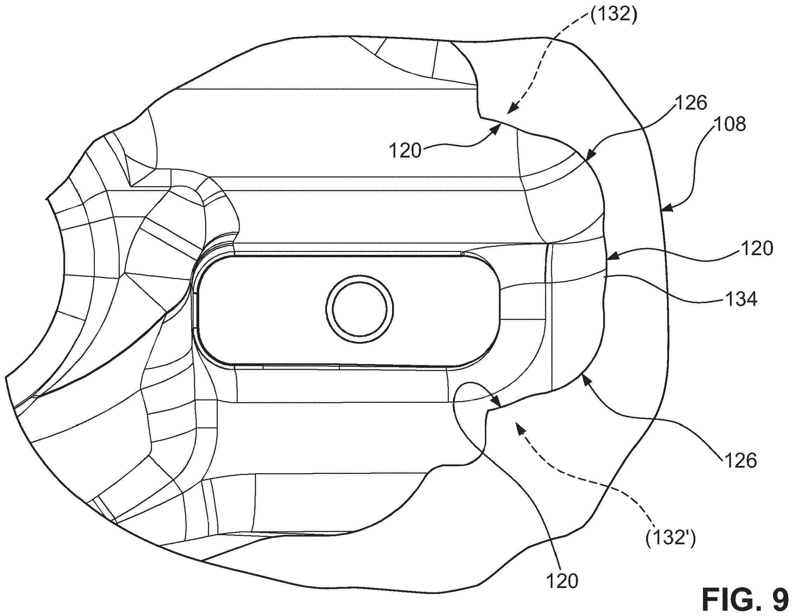

Wie in Fig. 8 gezeigt, kann bei diesem Ausführungsbeispiel ein aus dem Stand der Technik vorbekanntes Druckstück 106 mit im Wesentlichen halbmondförmigen Außenkonturen 114 verwendet werden. Fig. 9 zeigt eine Detailansicht des Bremssattels 104 mit den Kontaktflächen 120 sowie den Trennflächen 126, welche einen Teil der Druckstückführung 108 bilden. Die Kontaktflächen 120 wiederum weisen ein erstes Kontaktflächenpaar 132, 132` zur seitlichen Führung eines Druckstückes 106 in der ersten Richtung auf. Die zweite Kontaktfläche 134 dient der seitlichen Führung des Druckstückes 106 in der zweiten Richtung.

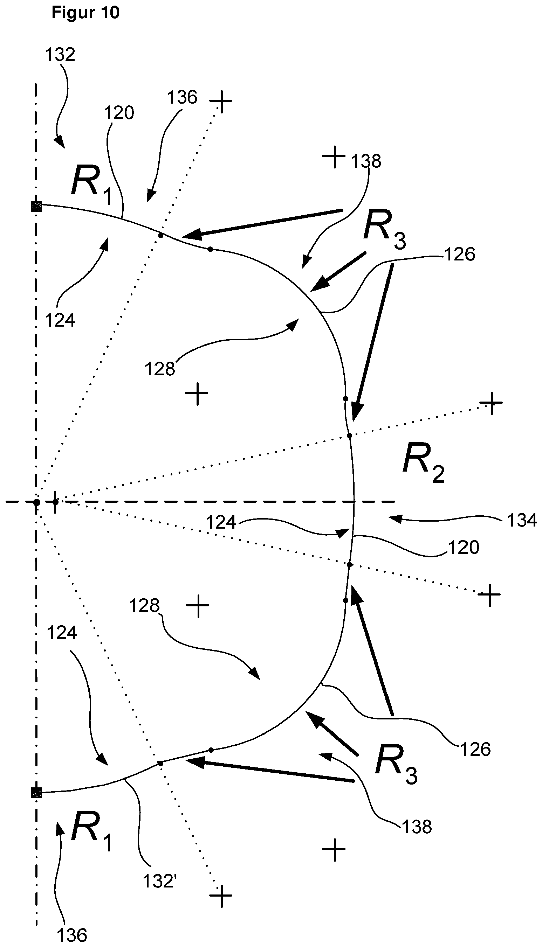

Wie Fig. 10 entnehmbar ist, sind die Kontaktflächen 120 durch Teilkreise 124 gebildet. Diese weisen eine konkave Krümmung 136 auf. Die Trennflächen 126 hingegen sind zwar ebenfalls durch Teilkreise 128 gebildet, diese weisen jedoch eine von den Kontaktflächen abweichende Krümmung 138 auf, so dass es bei Einbau des Druckstücks in die Bremse zu einer Beabstandung zwischen Druckstück und Druckstückführung in diesen Bereichen kommt. Die Kontaktflächen 120 des ersten Kontaktflächenpaares 132, 132` weisen einen Radius R₁' sowie einen Radiusmittelpunkt C1' auf. Die zweite Kontaktflächen 134 zur seitlichen Führung des Druckstückes 106 in der zweiten Richtung weist einen Radius R₂' sowie einen Radiusmittelpunkt C2` auf. In dem in der Fig. 10 gezeigten Ausführungsbeispiel weichen sowohl die Radienmittelpunkte C1 'und C2' als auch die Radien R₁' und R₂' voneinander ab. Durch gezielte Beeinflussung der Radienmittelpunkte C1' sowie C2' und der Radien R₁' sowie R₂' erfolgt eine weitestgehend unabhängige Einstellung des seitlichen Führungsspiels in der ersten Richtung und der zweiten Richtung zwischen dem Druckstück 106 und dem Bremssattel 104 in der Druckstückführung 108.

Die Kontaktflächen 120 werden durch Teilkreise 124 gebildet. Die Trennflächen 126 werden ebenfalls durch Teilkreise 128 gebildet. Die Teilkreise der Kontaktflächen 124 gehen vorliegend unterbrechungsfrei in die Teilkreise der Trennflächen 128 über. Die Teilkreise der Kontaktflächen 124 weisen eine konkave Krümmung 136.

### Bezugszeichenliste (Teil der Beschreibung)

- 2: Fahrzeugbremse
- 4: Bremssattel
- 6: Druckstück
- 8: Druckstückführung
- 10: Bewegungsachse
- 12: Ausnehmung
- 14: Druckstück-Au ßenkontur
- 16: Teilflächen
- 18: Bezugsebenenbereich
- 20: Kontaktflächen
- 22: konvexe Wölbung des Druckstück-Kontaktflächen
- 24: Teilkreis einer Kontaktfläche
- 26: Trennflächen
- 28: Teilkreis einer Trennfläche
- 30: konkave Wölbung der Druckstück-Trennflächen
- 32, 32': erstes Kontaktflächenpaar zur radialen Führung des Druckstücks
- 34: zweite Kontaktfläche zur tangentialen Führung des Druckstücks
- 102: Fahrzeugbremse
- 104: Bremssattel
- 106: Druckstück
- 108: Druckstückführung
- 110: Bewegungsachse
- 112: Ausnehmung
- 114: Druckstück-Außenkontur
- 116: Teilflächen
- 118: Bezugsebenenbereich
- 120: Kontaktflächen
- 124: Teilkreis einer Kontaktfläche
- 126: Trennflächen
- 128: Teilkreis einer Trennfläche
- 132, 132': erstes Kontaktflächenpaar zur radialen Führung des Druckstücks
- 134: zweite Kontaktfläche zur tangentialen Führung des Druckstücks
- 136: konkave Wölbung der Ausnehmungs-Kontaktflächen
- 138: konvexe Wölbung der Ausnehmungs-Trennflächen

- R₁, R₂, R₃: Radien
- C1, C2: Radienmittelpunkte
- R₁', R₂', R₃': Radien
- C1', C2': Radienmittelpunkte

## Patentansprüche

1. Fahrzeugbremse (2, 102), insbesondere Nutzfahrzeug-Druckluftscheibenbremse, mit
einem Bremssattel (4, 104),
einer in dem Bremssattel (4, 104) angeordneten Druckstückführung (8, 108), und
einem in der Druckstückführung (8, 108) entlang einer Bewegungsachse (10, 110) geführten Druckstück (6, 106),
wobei die Druckstückführung (8, 108) als Ausnehmung (12, 112) ausgebildet ist, und das Druckstück (6, 106) eine mit der Ausnehmung korrespondierende Außenkontur (14, 114) aufweist,
**dadurch gekennzeichnet, dass**
die Druckstückführung (108) und/oder die Außenkontur (14) des Druckstücks auf beiden Seiten des Druckstücks (6) in mehrere gekrümmte zueinander beabstandete Teilflächen (16, 116) unterteilt ist.

2. Fahrzeugbremse (2, 102) nach Anspruch 1,
**dadurch gekennzeichnet, dass** die Teilflächen (16, 116) Kontaktflächen (20, 120) zum Abstützen des Druckstücks (6, 106) an der Druckstückführung (8, 108) aufweisen,
wobei sich die Kontaktflächen (20, 120) zumindest teilweise in Richtung der Bewegungsachse (10, 110) erstrecken,
und wobei die Kontaktflächen (20) an dem Druckstück (6) in einem Bezugsebenenbereich (18, 118) senkrecht zur Bewegungsachse (10) des Druckstücks (6) eine konvexe Krümmung (22) aufweisen und/oder die Kontaktflächen (120) an der Ausnehmung (112) in dem Bezugsebenenbereich (118) eine konkave Krümmung (136) aufweisen.

3. Fahrzeugbremse (2, 102) nach Anspruch 2,
**dadurch gekennzeichnet, dass** die konkave Krümmung (136) und/oder die konvexe Krümmung (22) in dem Bezugsebenenbereich (18, 118) einen Teilkreis (24, 124) beschreibt.

4. Fahrzeugbremse (2, 102) nach Anspruch 2 oder 3,
**dadurch gekennzeichnet, dass** die Druckstückführung (108) und/oder das Druckstück (6) ein erstes Kontaktflächenpaar (32, 32', 132, 132') zur seitlichen Führung des Druckstücks (6, 106) in der ersten Richtung aufweisen und/oder eine zweite Kontaktfläche (34, 134) zur seitlichen Führung des Druckstücks (6, 106) in der zweiten Richtung.

5. Fahrzeugbremse (2, 102) nach Anspruch 4,
**dadurch gekennzeichnet, dass** wenigstens eine der Kontaktflächen (20, 120) des ersten Kontaktflächenpaars (32, 32', 132, 132') in dem Bezugsebenenbereich (18, 118) durch jeweils einen Teilkreisabschnitt (24, 124) mit einem ersten Radius (R₁) und einen Radiusmittelpunkt (C1) gebildet ist
und/oder die zweite Kontaktfläche (34, 134) in dem Bezugsebenenbereich (18, 118) durch einen Teilkreisabschnitt (24, 124) mit einem zweiten Radius (R₂) und einem zweiten Radiusmittelpunkt (C2) gebildet ist.

6. Fahrzeugbremse (2, 102) nach Anspruch 5,
**dadurch gekennzeichnet, dass** die Radien (R₁) sowie (R₂) ihrer Größe nach voneinander abweichen.

7. Fahrzeugbremse (2, 102) nach Anspruch 5,
**dadurch gekennzeichnet, dass** die Radienmittelpunkte (C1) sowie (C2) voneinander abweichen.

8. Fahrzeugbremse (2, 102) nach einem der vorstehenden Ansprüche,
**dadurch gekennzeichnet, dass** zwischen den Kontaktflächen (20, 120) Trennflächen (26, 126) angeordnet sind.

9. Fahrzeugbremse (2, 102) nach Anspruch 8,
**dadurch gekennzeichnet, dass** die Trennflächen (126) der Druckstückführung (108) in dem Bezugsebenenbereich (118) eine von der Krümmung der Kontaktflächen abweichende Krümmung (138) aufweisen und/oder die Trennflächen (26) an dem Druckstück (6) in den Bezugsebenenbereich (18) eine von der Krümmung der Kontaktflächen abweichende Krümmung (30) aufweisen.

10. Fahrzeugbremse (2, 102) nach einem der Ansprüche 8 oder 9,
**dadurch gekennzeichnet, dass** wenigstens eine Trennfläche (26, 126) in dem Bezugsebenenbereich (18, 118) zumindest abschnittsweise einen Teilkreis (28, 128) beschreibt.

11. Fahrzeugbremse (2, 102) nach einem der vorstehenden Ansprüche,
**dadurch gekennzeichnet, dass**
die Trennflächen (26, 126) und die Teilflächen (16, 116) der Kontaktflächen (20, 120) unterbrechungsfrei ineinander übergehen.

12. Fahrzeugbremse (2, 102) nach einem der vorstehenden Ansprüche, **dadurch gekennzeichnet, dass** am Übergang zwischen zwei gewölbten Abschnitten (22,30, 136,138) Zwischenabschnitte angeordnet sind.

13. Druckstück (6) für eine Fahrzeugbremse (2, 102), insbesondere für eine Nutzfahrzeug-Druckluftscheibenbremse,
**dadurch gekennzeichnet, dass** das Druckstück (6) eine Außenkontur (14) aufweist, welche in mehrere gekrümmte zueinander beabstandete Teilflächen (16) unterteilt ist.

14. Druckstück (6) nach Anspruch 13,
**dadurch gekennzeichnet, dass** die Teilflächen (16) Kontaktflächen (20) zum Abstützen des Druckstücks (6) an einer Druckstückführung (8) aufweisen, wobei sich die Kontaktflächen (20) zumindest teilweise in Richtung einer Druckstück-Bewegungsachse (10) erstrecken,
und wobei die Kontaktflächen (20) an dem Druckstück (6) in einem Bezugsebenenbereich (18) senkrecht zur Bewegungsachse (10) des Druckstücks (6) eine konvexe Krümmung (22) aufweisen.

15. Druckstück (6) nach Anspruch 14,
**dadurch gekennzeichnet, dass** die konvexe Krümmung (22) in dem Bezugsebenenbereich (18) einen Teilkreis (24) beschreibt.

16. Druckstück (6) nach Anspruch 14 oder 15,
**dadurch gekennzeichnet, dass** das Druckstück (6) ein erstes Kontaktflächenpaar (32, 32') zur seitlichen Führung des Druckstücks (6) in der ersten Richtung aufweist und/oder eine zweite Kontaktfläche (34) zur seitlichen Führung des Druckstücks (6) in der zweiten Richtung.

17. Druckstück (6) nach Anspruch 16,
**dadurch gekennzeichnet, dass** wenigstens eine der Kontaktflächen (20) des Kontaktflächenpaars (32, 32') in dem Bezugsebenenbereich (18) durch jeweils einen Teilkreisabschnitt (24) mit einem ersten Radius (R₁) und einen Radiusmittelpunkt (C1) gebildet ist
und/oder die zweite Kontaktfläche (34) in dem Bezugsebenenbereich (18) durch einen Teilkreisabschnitt (24) mit einem zweiten Radius (R₂) und einem zweiten Radiusmittelpunkt (C2) gebildet ist.

18. Druckstück (6) nach Anspruch 17,
**dadurch gekennzeichnet, dass** die Radien (R₁) sowie (R₂) ihrer Größe nach voneinander abweichen und/oder die Radienmittelpunkte (C1) sowie (C2) voneinander abweichen.

19. Druckstück (6) nach einem der Ansprüche 13 bis 18,
**dadurch gekennzeichnet, dass** zwischen den Kontaktflächen (20) Trennflächen (26) angeordnet sind, insbesondere wobei die Trennflächen (26) an dem Druckstück (6) in den Bezugsebenenbereich (18) eine konkave Krümmung (30) aufweisen.

20. Druckstück (6) nach Anspruch 19,
**dadurch gekennzeichnet, dass** wenigstens zwei gewölbte Abschnitte (22, 30) unterbrechungsfrei ineinander übergehen oder am Übergang zwischen zwei gewölbten Abschnitten (22, 30) Zwischenabschnitte angeordnet sind.

## Claims

1. Vehicle brake (2, 102), in particular a utility vehicle compressed-air disk brake, comprising
a brake caliper (4, 104),
a pressure piece guide (8, 108) arranged in the brake caliper (4, 104), and
a pressure piece (6, 106) guided along a movement axis (10, 110) in the pressure piece guide (8, 108),
the pressure piece guide (8, 108) being designed as a recess (12, 112), and the pressure piece (6, 106) having an outer contour (14, 114) corresponding to the recess,
**characterized in that**
the pressure piece guide (108) and/or the outer contour (14) of the pressure piece is divided on both sides of the pressure piece (6) into a plurality of curved, mutually spaced partial surfaces (16, 116).

2. Vehicle brake (2, 102) according to claim 1,
**characterized in that** the partial surfaces (16, 116) have contact surfaces (20, 120) for supporting the pressure piece (6, 106) on the pressure piece guide (8, 108),
wherein the contact surfaces (20, 120) extend at least partially in the direction of the movement axis (10, 110),
and wherein the contact surfaces (20) on the pressure piece (6) have a convex curvature (22) in a reference plane region (18, 118) perpendicular to the movement axis (10) of the pressure piece (6) and/or the contact surfaces (120) on the recess (112) have a concave curvature (136) in the reference plane region (118).

3. Vehicle brake (2, 102) according to claim 2,
**characterized in that** the concave curvature (136) and/or the convex curvature (22) in the reference plane region (18, 118) describes a pitch circle (24, 124).

4. Vehicle brake (2, 102) according to claim 2 or 3,
**characterized in that** the pressure piece guide (108) and/or the pressure piece (6) have a first contact surface pair (32, 32', 132, 132') for lateral guidance of the pressure piece (6, 106) in the first direction and/or a second contact surface (34, 134) for lateral guidance of the pressure piece (6, 106) in the second direction.

5. Vehicle brake (2, 102) according to claim 4,
**characterized in that** at least one of the contact surfaces (20, 120) of the first contact surface pair (32, 32', 132, 132') in the reference plane region (18, 118) is formed in each case by a pitch circle portion (24, 124) having a first radius (R₁) and a radius center point (C1)
and/or the second contact surface (34, 134) in the reference plane region (18, 118) is formed by a pitch circle portion (24, 124) having a second radius (R₂) and a second radius center point (C2).

6. Vehicle brake (2, 102) according to claim 5,
**characterized in that** the radii (R₁) and (R₂) differ in magnitude.

7. Vehicle brake (2, 102) according to claim 5,
**characterized in that** the radius center points (C1) and (C2) are different.

8. Vehicle brake (2, 102) according to any of the preceding claims,
**characterized in that** separating surfaces (26, 126) are arranged between the contact surfaces (20, 120).

9. Vehicle brake (2, 102) according to claim 8,
**characterized in that** the separating surfaces (126) of the pressure piece guide (108) in the reference plane region (118) have a curvature (138) deviating from the curvature of the contact surfaces and/or the separating surfaces (26) on the pressure piece (6) in the reference plane region (18) have a curvature (30) deviating from the curvature of the contact surfaces.

10. Vehicle brake (2, 102) according to either of claims 8 or 9,
**characterized in that** at least one separating surface (26, 126) in the reference plane region (18, 118) at least partly describes a pitch circle (28, 128).

11. Vehicle brake (2, 102) according to any of the preceding claims,
**characterized in that**
the separating surfaces (26, 126) and the partial surfaces (16, 116) of the contact surfaces (20, 120) merge into one another without interruption.

12. Vehicle brake (2, 102) according to any of the preceding claims,
**characterized in that** intermediate portions are arranged at the transition between two curved portions (22,30, 136,138).

13. Pressure piece (6) for a vehicle brake (2, 102), in particular for a utility vehicle compressed-air disk brake,
**characterized in that** the pressure piece (6) has an outer contour (14) which is divided into a plurality of curved, mutually spaced partial surfaces (16).

14. Pressure piece (6) according to claim 13,
**characterized in that** the partial surfaces (16) have contact surfaces (20) for supporting the pressure piece (6) on a pressure piece guide (8),
wherein the contact surfaces (20) extend at least partially in the direction of a pressure piece movement axis (10),
and wherein the contact surfaces (20) on the pressure piece (6) have a convex curvature (22) in a reference plane region (18) perpendicular to the movement axis (10) of the pressure piece (6).

15. Pressure piece (6) according to claim 14,
**characterized in that** the convex curvature (22) in the reference plane region (18) describes a pitch circle (24).

16. Pressure piece (6) according to claim 14 or 15,
**characterized in that** the pressure piece (6) has a first contact surface pair (32, 32') for lateral guidance of the pressure piece (6) in the first direction and/or a second contact surface (34) for lateral guidance of the pressure piece (6) in the second direction.

17. Pressure piece (6) according to claim 16,
**characterized in that** at least one of the contact surfaces (20) of the first contact surface pair (32, 32') in the reference plane region (18) is formed in each case by a pitch circle portion (24) having a first radius (R₁) and a radius center point (C1)
and/or the second contact surface (34) in the reference plane region (18) is formed by a pitch circle portion (24) having a second radius (R₂) and a second radius center point (C2).

18. Pressure piece (6) according to claim 17,
**characterized in that** the radii (R₁) and (R₂) differ in magnitude and/or the radius center points (C1) and (C2) are different.

19. Pressure piece (6) according to any of claims 13 to 18,
**characterized in that** separating surfaces (26) are arranged between the contact surfaces (20), in particular wherein the separating surfaces (26) on the pressure piece (6) have a concave curvature (30) in the reference plane region (18).

20. Pressure piece (6) according to claim 19,
**characterized in that** at least two curved portions (22, 30) merge into one another without interruption or intermediate portions are arranged at the transition between two curved portions (22, 30).

## Revendications

1. Frein de véhicule (2, 102), en particulier frein à disque pneumatique de véhicule utilitaire, comportant
un étrier de frein (4, 104),
un guide de pièce de poussée (8, 108) disposé dans l'étrier de frein (4, 104), et
une pièce de poussée (6, 106) guidée dans le guide de pièce de poussée (8, 108) le long d'un axe de déplacement (10, 110),
le guide de pièce de poussée (8, 108) étant conçu comme une cavité (12, 112) et la pièce de poussée (6, 106) présentant un contour extérieur (14, 114) correspondant à la cavité,
**caractérisé en ce que**
le guide de pièce de poussée (108) et/ou le contour extérieur (14) de la pièce de poussée sont divisés des deux côtés de la pièce de poussée (6) en plusieurs surfaces partielles (16, 116) courbes espacées les unes des autres.

2. Frein de véhicule (2, 102) selon la revendication 1,
**caractérisé en ce que** les surfaces partielles (16, 116) présentent des surfaces de contact (20, 120) pour le support de la pièce de poussée (6, 106) sur le guide de pièce de poussée (8, 108),
les surfaces de contact (20, 120) s'étendant au moins partiellement en direction de l'axe de déplacement (10, 110),
et les surfaces de contact (20) au niveau de la pièce de poussée (6) présentant une courbure convexe (22) dans une zone de plans de référence (18, 118) perpendiculaire à l'axe de déplacement (10) de la pièce de poussée (6) et/ou les surfaces de contact (120) au niveau de la cavité (112) présentant une courbure concave (136) dans la zone de plans de référence (118).

3. Frein de véhicule (2, 102) selon la revendication 2,
**caractérisé en ce que** la courbure concave (136) et/ou la courbure convexe (22) décrivent un cercle partiel (24, 124) dans la zone de plans de référence (18, 118).

4. Frein de véhicule (2, 102) selon la revendication 2 ou 3,
**caractérisé en ce que** le guide de pièce de poussée (108) et/ou la pièce de poussée (6) présentent une première paire de surfaces de contact (32, 32', 132, 132') pour le guidage latéral de la pièce de poussée (6, 106) dans la première direction et/ou une seconde surface de contact (34, 134) pour le guidage latéral de la pièce de poussée (6, 106) dans la seconde direction.

5. Frein de véhicule (2, 102) selon la revendication 4,
**caractérisé en ce qu'**au moins l'une des surfaces de contact (20, 120) de la première paire de surfaces de contact (32, 32', 132, 132') est formée dans la zone de plans de référence (18, 118) par respectivement une section de cercle partiel (24, 124) comportant un premier rayon (R₁) et un centre de rayon (C1)
et/ou la seconde surface de contact (34, 134) est formée dans la zone de plans de référence (18, 118) par une section de cercle partiel (24, 124) comportant un second rayon (R₂) et un second centre de rayon (C2).

6. Frein de véhicule (2, 102) selon la revendication 5,
**caractérisé en ce que** les rayons (R₁) ainsi que (R₂) diffèrent l'un de l'autre par leur taille.

7. Frein de véhicule (2, 102) selon la revendication 5,
**caractérisé en ce que** les centres de rayon (C1) ainsi que (C2) diffèrent l'un de l'autre.

8. Frein de véhicule (2, 102) selon l'une des revendications précédentes,
**caractérisé en ce que** des surfaces de séparation (26, 126) sont disposées entre les surfaces de contact (20, 120).

9. Frein de véhicule (2, 102) selon la revendication 8,
**caractérisé en ce que** les surfaces de séparation (126) du guide de pièce de poussée (108) présentent, dans la zone de plans de référence (118), une courbure (138) différente de la courbure des surfaces de contact et/ou les surfaces de séparation (26) au niveau de la pièce de poussée (6) présentent, dans la zone de plans de référence (18), une courbure (30) différente de la courbure des surfaces de contact.

10. Frein de véhicule (2, 102) selon l'une des revendications 8 ou 9,
**caractérisé en ce qu'**au moins une surface de séparation (26, 126) décrit, dans la zone de plans de référence (18, 118), au moins dans certaines sections, un cercle partiel (28, 128).

11. Frein de véhicule (2, 102) selon l'une des revendications précédentes,
**caractérisé en ce que**
les surfaces de séparation (26, 126) et les surfaces partielles (16, 116) des surfaces de contact (20, 120) se confondent les unes dans les autres de manière ininterrompue.

12. Frein de véhicule (2, 102) selon l'une des revendications précédentes, **caractérisé en ce que** des sections intermédiaires sont disposées au niveau de la transition entre deux sections bombées (22,30, 136,138).

13. Pièce de poussée (6) pour un frein de véhicule (2, 102), en particulier pour un frein à disque pneumatique de véhicule utilitaire,
**caractérisée en ce que** la pièce de poussée (6) présente un contour extérieur (14), lequel est divisé en plusieurs surfaces partielles (16) courbes espacées les unes des autres.

14. Pièce de poussée (6) selon la revendication 13,
**caractérisée en ce que** les surfaces partielles (16) présentent des surfaces de contact (20) pour le support de la pièce de poussée (6) sur un guide de pièce de poussée (8),
les surfaces de contact (20) s'étendant au moins partiellement en direction d'un axe de déplacement de pièce de poussée (10),
et les surfaces de contact (20) au niveau de la pièce de poussée (6) présentant, dans une zone de plans de référence (18) perpendiculaire à l'axe de déplacement (10) de la pièce de poussée (6), une courbure convexe (22).

15. Pièce de poussée (6) selon la revendication 14,
**caractérisée en ce que** la courbure convexe (22) décrit un cercle partiel (24) dans la zone de plans de référence (18).

16. Pièce de poussée (6) selon la revendication 14 ou 15,
**caractérisée en ce que** la pièce de poussée (6) présente une première paire de surfaces de contact (32, 32') pour le guidage latéral de la pièce de poussée (6) dans la première direction et/ou une seconde surface de contact (34) pour le guidage latéral de la pièce de poussée (6) dans la seconde direction.

17. Pièce de poussée (6) selon la revendication 16,
**caractérisée en ce qu'**au moins l'une des surfaces de contact (20) de la paire de surfaces de contact (32, 32') est formée dans la zone de plans de référence (18) par respectivement une section de cercle partiel (24) comportant un premier rayon (R₁) et un centre de rayon (C1)
et/ou la seconde surface de contact (34) est formée dans la zone de plans de référence (18) par une section de cercle partiel (24) comportant un second rayon (R₂) et un second centre de rayon (C2).

18. Pièce de poussée (6) selon la revendication 17,
**caractérisée en ce que** les rayons (R₁) ainsi que (R₂) diffèrent l'un de l'autre par leur taille et/ou les centres de rayon (C1) ainsi que (C2) diffèrent l'un de l'autre.

19. Pièce de poussée (6) selon l'une des revendications 13 à 18,
**caractérisée en ce que** des surfaces de séparation (26) sont disposées entre les surfaces de contact (20), en particulier les surfaces de séparation (26) au niveau de la pièce de poussée (6) présentant une courbure concave (30) dans la zone de plans de référence (18).

20. Pièce de poussée (6) selon la revendication 19,
**caractérisée en ce qu'**au moins deux sections bombées (22, 30) se confondent l'une dans l'autre de manière ininterrompue ou des sections intermédiaires sont disposées au niveau de la transition entre deux sections bombées (22, 30).
